# EUROPEAN PATENT APPLICATION

(11) **EP 1 959 688 A2**
(43) Date of publication of application: **20.08.2008**
(21) Application number: 08101387.2
(22) Date of filing: 07.02.2008
(51) Int. Cl.: H04N 7/26

(54) **Bitrate reduction method by requantization**

(30) Priority: 16.02.2007 FR 0753305
(71) Applicant: Thomson Licensing, Inc., 92100 Boulogne-Billancourt (FR)
(72) Inventor: Bordes, Philippe, 35890 Laille (FR); Orhand, Anita, 35310 Mordelles (FR)
(74) Representative: Berthier, Karine

(57) **Abstract**

The method is characterized in that:
- if the current macroblock was coded according to the "skipped macroblock" mode and if at least one corrected coefficient block of said macroblock has coefficients non-null or greater than a predefined threshold, the coding mode of the macroblock is modified (50) into a mode other than "skipped macroblock" and the data of the data stream is modified or added (50) to specify this mode and the value of the coefficients.

## Description

The invention relates to a method for reducing the bitrate of a video data stream coded according to a coding using the intra and inter modes from reference pictures.

It applies more particularly to the video streams of the H.264 or AVC or MPEG-4 type. This standard is described for example in the document ITU-T Rec. H264/ISO/IEC 14496-10 AVC (MPEG4).

The domain is that of the broadcast of television programmes by radio, satellite or cable channels known as "broadcast", also that of the broadcast of television programmes according to the internet protocol or IP, by fixed wire or wireless, on ADSL, also known as "broadband".

The bitrate reduction method or "transrating", and as defined here, consists in changing the transmission bitrate of a data stream coded according to a standard into another coded data stream generally according to the same standard, the reduction being made in the transform domain. It must be differentiated from the transcoding method, which consists in decoding the pictures then reencoding them with an encoder. The coding and decoding are performed at the level of the pixels, reason for which this method is also called transcoding in the pixel domain. Although the bitrate reduction method is also sometimes called "transcoding in the transform domain", the term "transcoding" will be reserved for the pixel domain hereafter.

It is noted that if, as mentioned above, the bitrate reduction is relative in general to the pictures of a same standard, the transcoding can provide pictures at a new standard. The reduction can consist in a partial decoding of the data, for example a dequantization of the DCT coefficients if the MPEG standard is used, then an inversion partial recoding, a requantization of this data according to the required bitrate.

The transport system of the video from its place of creation, storage or emission until its place of destination, at the final user or users, may involve many contributors and several transformations. In particular, it may be necessary to transform the content, the video, to adapt it to the constraints of the transport, available bandwidth, to take into account economic or commercial considerations, for instance the insertion of adverts. These transformations sometimes require reducing the bitrate of the transported video and technique of bitrate reduction or of video stream transcoding is then necessary. It consists in transforming, on the fly, an incident encoded video into another encoded video stream with a lower bitrate.

The video transcoding consists in cascading a decoder and video encoder. This technique has the advantage of being flexible, it is easily possible to change the encoding parameters, the format, the standard, the coding modes, etc. or to insert a logo. However, the quantity of calculations, there is a decoder and an encoder, is large, particularly with respect to a bitrate reduction solution. Naturally, the calculations at the level of the encoder can be reduced by reusing information such as motion fields, coding modes, etc. of the first encoding pass. Indeed, the further one gets from the original bitrate, the less the hypothesis that the coding decisions used are suitable, is confirmed.

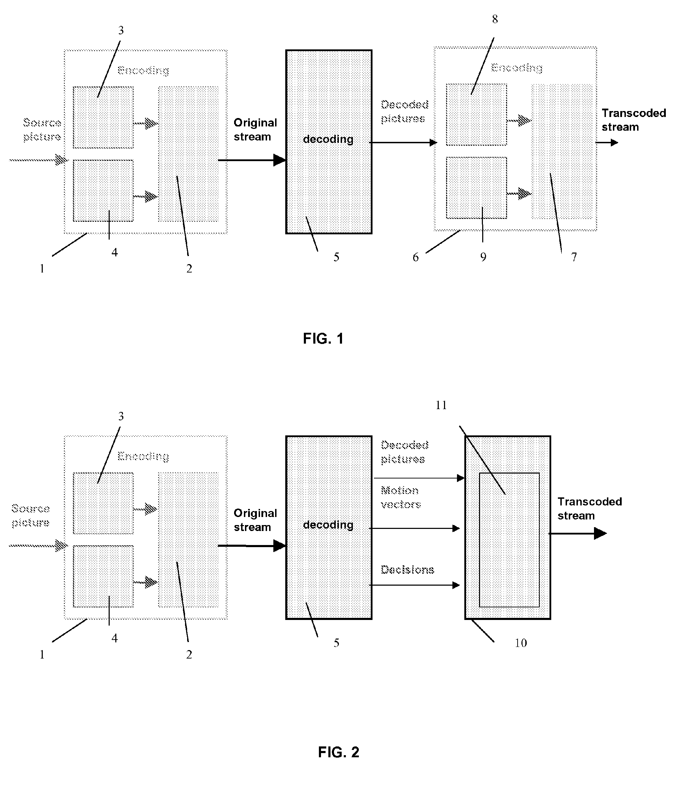

The figure 1 shows a video stream transcoding device according to the prior art, not using the information of the first encoding pass.

The encoder referenced 1 receives the video data from the source picture. It comprises, in a classical manner, a motion estimator 3 for the calculation of the motion vectors used for the coding in inter mode and a decision block of coding modes 4, for example according to the cost. The circuit 2 is the coding core using, among other elements, the discrete cosine transform and the quantization. The data stream thus coded or original stream if reference is made to the transcoding, is then transmitted to a decoder 5 that carries out the inverse operations of the decoder to provide the decoded pictures. A second encoder 6 of the encoder type 1 carries out the coding operations from its coding core 7 using the information of its motion estimation circuit 8 and from its coding mode decision circuit 9, to provide a transcoded flow at the required bitrate.

The figure 2 shows a video stream transcoding device according to the prior art, using the information of the first encoding pass. The circuits upstream of the decoder 5 are identical. The motion information and the coding mode decisions are sent by the decoder 5, at the same time as the decoded pictures, to a new simplified coding circuit 10, to provide a transcoded flow at the required bitrate. Here, the motion estimation and coding mode decision circuits are unnecessary as this information comes from the decoder 5. The coding core 11 processes this information in a similar manner to the coding core 7 for the information of the circuits 8 and 9.

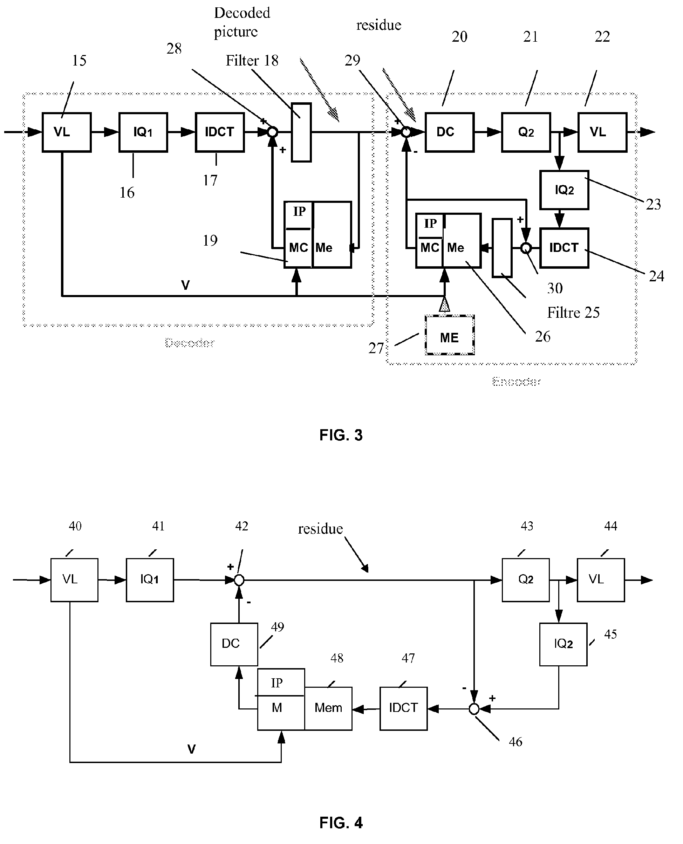

Figure 3 shows the main blocks that comprise a video decoder and encoder, surrounded by a dotted line in the figure, of the MPEG-2 or AVC type, cascaded.

The source signal is sent to the input of the encoder that is also the input of a variable length decoding circuit VLD 15. This signal then crosses an inverse quantization circuit IQ1 16, an inverse discrete cosine transform IDCT 17, an adder 28, a filter 18. The output of the filter is the output of the decoding circuit. It is connected to the input of a circuit 19 constituted by a memory and a motion compensation MC or Intra prediction circuit. The compensation is obtained from motion vectors V decoded from the stream received by means of the VLD circuit. The Intra prediction is constructed from neighbouring blocks and from the Intra prediction decoded from the stream received by means of the VLD circuit. To the decoded residue block at the input of the adder 28 is added the predicted block from the picture or blocks of the reconstructed reference picture stored at 19, and from the motion vector(s) V, or from the Intra prediction mode, associated with the decoded block.

The decoded picture at the output of the filter is sent to the input of an encoder to successively supply a subtractor 29, a discrete cosine transform circuit DCT 20, a quantizer Q2 21, a variable length coding circuit VLC 22 of which the output is the data stream coded at the new bitrate. The coefficient blocks converted and quantized, at the output of the quantizer Q2, are reconstructed by means of an inverse quantizer IQ2, 23, an inverse discrete cosine transform circuit IDCT 24. To the residue block thus reconstructed and sent to a first input of an adder 30 is added the predicted block sent to a second input of this adder 30. The reconstructed block, obtained at the output of this adder, is filtered by means of the filter 25 then memorised in the circuit 26 that therefore stores the reconstructed picture being coded. The motion compensation and Intra prediction circuit associated with the memory circuit, the set constituting the referenced circuit 26, performs the motion compensation according to the motion vectors received, case of Inter prediction, or Intra prediction, to define the predicted block in the picture. This predicted block is transmitted on a second input of the subtractor 29 that provides at its output the residue block in inter coding mode or intra prediction mode.

Either, the motion vectors are calculated by the coder that thus comprises a motion estimation circuit 27. Or these vectors come from the decoding circuit, thus sparing this motion estimator, to the detriment of the quality as described above.

A simplified architecture is proposed by G. J. Keesman in the document entitled "Multi-program Video Data Compression", Thesis Technische Universiteit Delft. ISBN 90-74445-20-9, 1995, that takes into account the linearity of the DCT transformation and of the motion compensation.

Figure 4 shows such a simplified architecture of bitrate reduction T2. A retroaction loop of the quantization error is added.

The compressed video data stream is sent to the input of the variable length decoding circuit VLD 40, then an inverse quantization circuit IQ1 41 that performs a dequantization operation using for example the quantization step used during the coding. To the dequantized coefficient blocks sent to a first input of a subtractor 42 are subtracted the requantization errors predictions coming from the discrete cosine transformation circuit DCT 49 sent to the second input of the subtractor. In inter mode, therefore when the dequantized coefficient blocks are inter residue blocks, this involves error predictions calculated from a requantization errors picture of the memorised reference picture, for a requantization errors block of this error picture matched with the current block by the associated motion vector. In intra mode, when the dequantized coefficient blocks are intra residue blocks, these are requantization errors calculated from blocks or macroblocks of the current picture previously processed and exploited for the intra predictive coding mode used for said current coefficient block. The predicted requantization errors block thus calculated in the spatial domain undergoes a discrete cosine transformation 49 to provide an error block in the transform domain, block subtracted from the dequantized current block. The corrected coefficient block thus obtained is sent to a quantization circuit Q2 43 then to a variable length coding circuit VLC 44 to provide the transcoded video data stream, converted into the required bitrate by the choice of the intermediate quantization step Q2 of the quantizer 43. At the output of said quantizer Q2 43, the signal is also send to an inverse quantizer IQ2 referenced 45. The output of this circuit gives corrected coefficient blocks reconstructed after quantization and dequantization at the quantization step Q2 from which are subtracted, by means of a subtractor 46, the corrected coefficient blocks after quantization and dequantization at the quantization step Q1. The difference represents the requantization error that is made. The reconstructed requantization errors block at the output of this subtractor 46, constituted by the requantization errors of these corrected coefficient blocks, is sent to an inverse discrete cosine transform circuit 47 and the error block obtained in the spatial domain is memorised by the circuit 48. For the inter mode coding, a picture of errors in the spatial domain is obtained, errors that were made by requantizing the coefficients. The errors made in a reference picture are stored so as to be used during the inter coding of the pictures for example of the bi-directional type or P type being based on reference pictures. These requantization errors of the coefficient blocks are translated in the spatial domain so as to be able to use the motion compensation, the information relating to the motion vectors being sent to this circuit 48 comprising the memory block and the motion compensation block. In intra mode, these are neighbouring blocks that are stored in the spatial domain so as to be able to calculate the requantization error according to the luminance values of the neighbouring blocks used for the intra prediction. The intra prediction block thus calculated or the motion compensated block for the inter prediction is extracted from the circuit 48 to be transformed by the discrete cosine transform circuit 49 before being sent to the second input of the subtractor 42. Naturally, the memory comprises the number of reference pictures used for the inter coding.

When a current block is requantized, it is thus possible to remove the error that was made on the reference pictures or neighbouring blocks on which said current block was based during its coding. Indeed, the decoder will supply these references with this requantization error.

This simplification can be applied to the transcoding of type MPEG 2 or MPEG 4 part 2 thus without using intra prediction or else to MPEG4 part 10 or AVC coding, the absence of filters in the loop nevertheless introducing a slight degradation.

This simplified architecture T2 enables a motion compensation block and an inverse quantization block to be deleted on the one hand, and one of the two picture storage modules to be deleted on the other hand. This architecture thus requires less calculation power and less memory resources. The decoded picture is never reconstructed, and the storage module is used to store the errors due to the requantization.

This architecture is not completely identical to the transcoding diagram as the quantization and inverse quantization operations on the one hand, and the discrete cosine transform and inverse transform calculations, which are linear combinations, on the other hand, give rise to rounding. Likewise, the operations in the spatial domain of motion compensation that use linear interpolations or calculation operations of predicted blocks from linear combinations on the luminance values of neighbouring blocks generate, by the calculation rounding, errors that cannot be taken into account by the T2 architecture. A degradation is therefore introduced that accumulates throughout a group of pictures or GOP, a degradation called "drift", as some pictures are used as prediction for the coding of the following pictures.

The simplified architecture T2 is based on the compensation of requantization errors made on the block that is used for prediction. This error is subtracted from the residues of the current block and thus the error does not propagate in the picture, intra prediction, or over time, inter temporal prediction. In the case where the residues are not coded, this error compensation cannot therefore be carried out and the error can propagate.

The invention aims to overcome the disadvantages described above. Its purpose is a bitrate reduction method of a first coded video data stream into a second stream, by dequantization of a coefficient block according to a first quantization step then requantization of a block according to a second quantization step, the coding using the predictive mode calculating a predicted block from a reference picture, characterized in that it comprises a correcting step of a coefficient block dequantized at the first quantization step, using a predicted requantization errors block of the reference picture obtained from a reconstructed requantization errors block, to give a corrected coefficient block, in that the requantized block is the corrected coefficient block and in that,
- if the current macroblock was coded according to the "skipped macroblock" mode and if at least one corrected coefficient block of this macroblock has coefficients non-null or greater than a predefined threshold, the coding mode of the macroblock is modified into a mode other than "skipped macroblock" and the data of the data stream is modified or added to specify this mode and the value of the coefficients.

According to a particular implementation, if the current macroblock is a non-skipped macroblock, if the coefficient block(s) of this macroblock have coefficients null or less than a predefined threshold and if the "skipped macroblock" mode conditions are met, the coding mode of the macroblock is changed to "skipped macroblock" mode. The "Skipped macroblock" mode conditions are that the non-skipped macroblock refers to the picture 0 of the reference list L0 (refldxL0 = 0) and that the motion vector is equal to the prediction motion vector.

According to a particular implementation, the modified or added data of the stream relates, besides the residue data, to the
- level of the syntax of the slice data, the fields:
   mb_skip_flag
      mb_field_decoding_flag
- level of the syntax of the macroblock layer, the fields:
   mb type
- level of the macroblock prediction syntax, the fields:
   ref idx l0 and ref idx l1,
      mvd 10 and mvd l1- transform_size_8x8.

According to a particular implementation, the macroblock mode initially skipped becomes P_L0_16x16 if it belongs to a slice P, B_Direct_16x16 if it belongs to a slice B.

According to a particular implementation, if the macroblock belongs to a picture of the MBAFF type, the value of the flag "mb_field_decoding_flag" is taken into account to determine whether the conditions are met.

According to a particular implementation, the predicted error block is obtained by motion compensation, from the motion vector associated with the current block, of the error picture formed by the reconstructed error blocks of the reference picture.

According to a particular implementation, the predicted error block is obtained by Intra prediction, from the intra prediction mode associated with the current block, prediction constructed from the reconstructed blocks of the current picture.

According to a particular implementation, the video data streams are coded according to the MPEG 4 part 10 standard.

Thanks to the method proposed, the degradation of quality of the pictures owing to the simplified architecture of bitrate reduction, without motion compensation or reference picture reconstruction, is greatly attenuated.

The requantization errors propagating, the macroblock errors can be affected: a macroblock all of whose residues were null can become non-null and conversely. The macroblock in "skipped macroblock" mode are tested in such a manner as to be decoded in another mode, when this is possible, enabling a better quality decoding for these macroblocks. Hence, the decoding of the macroblock can be performed in a different mode to the mode of the coding.

The errors due to the combination of this type of coding with the conversion of the bitrate are thus reduced, errors due to the fact that a skipped macroblock can be used as prediction at the level of the decoder and is therefore a potential source of drift. These errors are all the more inconvenient as they are especially visible in the uniform zones, zones favourable to the coding of macroblocks in "skipped macroblock" mode.

On the other hand, the possibility of using the "skipped macroblock" mode at the level of the bitrate converter enables the compression rate to be improved.

Other specific features and advantages of the invention will emerge clearly from the following description, provided as a non-restrictive example and referring to the annexed drawings wherein:
- figure 1 a transcoding method according to the prior art,
- figure 2, a transcoding method according to the prior art using information from a first pass,
- figure 3, an AVC transcoding method according to the prior art,
- figure 4, a simplified architecture of bitrate reduction according to the prior art,
- figure 5, a simplified architecture of bitrate reduction according to the invention.

Subsequently, for the purposes of accuracy, the terms or acronyms of the AVC standard can be recalled in brackets, the other terms being only approximate. The terms in the brackets are the ones defined in this standard, among others in section 3.

The AVC standard provides for several coding modes called "skipped" modes or "skipped macroblock" modes for which the macroblock residues are not coded and are considered to be null:
- the "P_Skip" mode for a macroblock belonging to a slice of type P (P slice), or of type SP (SP slice).
- the "B_Skip" mode for a macroblock belonging to a slice of type B (B slice).

These economical modes in terms of coding cost are however only possible under certain conditions that will justly enable the decoder at the end of the system to reconstruct said macroblock without further information. These prediction/reconstruction processes are defined in the standard, for example in the document "Draft of version 4 of H.264/AVC (ITU-T Recommendation H.264 and ISO/IEC 14496-10 (MPEG-4 part 10) Advanced Video Coding)", dated 11 January 2005, section 8.4 entitled "inter prediction process", in the subsections 8.4.1.1 "Derivation process for luma motion vectors for skipped macroblock in P and SP slice" and 8.4.1.2 "Derivation process for luma motion vectors for B_Skip":

The level or macroblock layer in the syntactic structure contains no data relating to the macroblock coded according to one of these modes. The macroblock is therefore defined at the upper level that is the slice in the data field relating to the slice (slice data). The decoder is thus responsible for predicting or reconstructing the said macroblock according to the current neighbourhood, and by inferring, that is deducing the information, syntax elements, absent from the bitstream. The standard provides for all the inference rules according to the case, for the "P_skip" mode or the "B_Skip" mode.

Hence, while a value is assigned to the different types of macroblocks (mb_type), the table 7-13 for the macroblocks belonging to the slices P and SP, the table 7-14 for the macroblocks belonging to the slices B, no information is sent in the macroblock layer for a "skipped" macroblock as it is not coded at all. Its type (mb_type), called "P_skip" or "B_skip" according to whether it belongs to a P slice or a B slice, enabling its coding characteristics to be decoded, respectively inter mode for the block 16x16 or direct mode for the sub-partitions 8x8, is not determined by a reference number as it is itself inferred, that is deduced.

Section 8.4.1.1 of the AVC standard "Derivation process for luma motion vectors for skipped macroblock in P and SP slice" relates to the "P_Skip" mode. It defines the index refldxL0, in the list of the reference pictures L0, and the motion vector mvL0 assigned to a macroblock coded according to the "skipped macroblock" mode.

The calculation of the refldxL0 index is very simple, a it is always 0. It is therefore deduced that during the encoding, a P type macroblock of which all the residues have been cancelled by the bitrate reduction operation, is a candidate for the skipped macroblock coding "P_Skip mode" if its residues refer to the first picture of the list L0.

As for the calculation of the motion vector mvL0, it is more complex as it involves the left neighbouring (A) and top neighbouring (B) macroblocks of the current macroblock, with their respective parameters refldxL0A, refldxL0B, mvL0A, mvL0B. This neighbour calculation is all the more complex when the MBAFF mode (MacroBlock Adaptive Frame Field) is active since in this case the fact the macroblock is of the biframe type (currMbFrameFlag = TRUE), or frame type (currMbFrameFlag = FALSE), comes into play, in combination with the fact that it is the top macroblock (mblsTopMbFlag = TRUE) or else the bottom macroblock (mblsTopMbFlag = FALSE) of the macroblock pair.

A macroblock of type P all of whose residues have been cancelled by the bitrate reduction operation, is a candidate for the "P_Skip mode" skipped macroblock coding mode if the flag currMbFrameFlag is the same as the one that would be inferred in "P_Skip mode" skipped macroblock coding mode. Now, in "P_Skip" mode, the syntax element mb_field_decoding_flag, that enables the flag currMbFrameFlag, is absent from the data stream. The inference rule is thus as follows:
- if there is a macroblock pair immediately to the left of the current macroblock pair, and in the same slice, then the value of the flag mb_field_decoding_flag must be inferred as being equal to that of the flag mb_field_decoding_flag of this neighbouring pair,
- otherwise, if there is a macroblock pair immediately above the current macroblock pair, and in the same slice, then the value of the flag mb_field_decoding_flag must be inferred as being equal to that of the flag mb_field_decoding_flag of this neighbouring pair.
- otherwise, the value of the flag mb_field_decoding_flag must be inferred as being equal to "FALSE"

It is therefore deduced that during the encoding, in MBAFF mode, a macroblock of type P all of whose residues have been cancelled by the bitrate reduction operation is a candidate for the "P_Skip" skipped macroblock coding mode if its flag mb_field_decoding_flag is equal to the one of its left-hand neighbouring pair if it exists, by default, equal to the one of its top neighbouring pair if it exists, and by default is equal to "FALSE".

Neither should the process that converts the luminance motion vectors mvL0 to chrominance motion vectors mvCL0 be forgotten. If the current macroblock is coded in frame mode and the reference picture defined by the index "refldxL0" is not of the same type, top frame source (TOP), bottom frame reference (BOTTOM) or the contrary, a readjustment of the components of the motion vectors by ±2 takes place between mvCL0 and mvL0.

It is therefore deduced that during the encoding, in MBAFF mode, a macroblock of type P all of whose residues have been cancelled by the bitrate reduction operation is a candidate for the "P_Skip" skipped macroblock coding mode if the content of the field defining a top (TOP) or bottom (BOTTOM) macroblock is the same a the one of the reference used.

The section "Derivation process for luma motion vectors for B_Skip" concerns the macroblocks of type "B_skip". It describes the obtaining of the indexes refldxL0 and refldxL1 from the lists of the reference pictures L0 and L1, moreover motion vectors mvL0 and mvL1, of the counter of the number of sub-partition vectors subMvCnt and use flags of the prediction lists predFlagL0 and predFlagL1.

During the encoding, in MBAFF mode, a macroblock of type B all of whose residues have been cancelled by the bitrate reduction operation is a candidate for the "B_Skip" skipped macroblock coding mode if its flag mb_field_decoding_flag is equal to the one of its left-hand neighbouring pair if it exists, by default, equal to the one of its top neighbouring pair if it exists, and by default is equal to FALSE.

Beyond the radical modes P_Skip and B_Skip, it is also possible to signal the absence of coding of the residues only for a given 8x8 partition or a 4x4 sub-partition of the current macroblock. This is the parameter CBP, coded block pattern syntax element, that makes it possible to define, for the entire macroblock, the null residue blocks or partitions. A mask value "mask(i)" is associated with each partition (i). Hence, the value "CBP & mask(i)" (&= logical AND) defines the partition i and its residue value. A null value indicates that the residues of this partition are null. As with the macroblock level, the requantization errors propagating, the residues of the sub-partitions of a macroblock can be assigned: a sub-partition of a macroblock all of whose residues were null (CBP & mask(i) = 0) can become non-null and conversely.

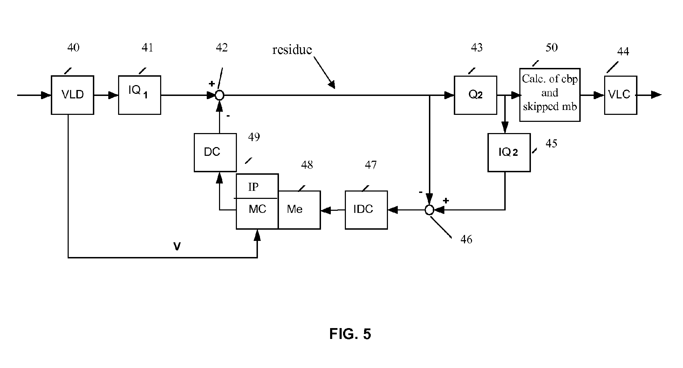

Figure 5 shows an example of a bitrate reduction architecture according to the invention.

This diagram is derived from the one of figure 4 and the references to the same circuits are used. Only the additional part to figure 4 is described.

The data stream to bitrate convert is sent to the input of the bitrate converter that is also the input of the variable length decoding circuit VLD 40. A processing circuit, not shown in the figure handles the different operations. When the data relative to the slice layer indicates that a macroblock is "skipped", this macroblock is reconstituted with values of null coefficients, the motion vectors are deduced, calculations performed for example by means of the processing circuit.

The macroblock blocks thus created are sent, just as for any macroblock, to the circuit 41 whose quantization operation is transparent then to the subcontractor 42 which performs a requantization error correction. The corrected block is quantized by the quantization circuit Q2 43, for example by taking as a quantization step, the quantization step of the previous macroblock or a mean of the previous macroblock quantization steps. The output of the circuit 43 is sent to the input of the inverse quantization circuit 45 for the calculation of the requantization errors and also to the input of a circuit called calculation circuit CBP + skip, the data calculated next being sent to the variable length coding circuit VLC 44. In relation to the previous configuration, a recalculation circuit of the CBP+skip is inserted between the requantization circuit Q2 43 and the input of the circuit VLC 44 for the calculation of the parameter CBP and the flag mb_skip_flag. Whereas in the prior art, the "skipped macroblock" mode was conserved, for a macroblock, during the bitrate reduction, even if this macroblock corrected from the requantization errors was different from zero, the method according to the invention will determine, by means of this circuit, whether or not the "skipped macroblock" coding mode must be conserved and conversely if a non-skipped macroblock can be coded according to the "skipped macroblock" mode after the quantization operations. Hence, it carries out another systematic calculation of the parameter CBP for the macroblock (CBP & mask(i)) obtained from the quantized corrected coefficient blocks, than a calculation of the skipped macroblock flag (mb_skip_flag) in two steps:

In a first step, the partitions are processed. If, following the correction due to the requantization errors on the one hand and to the requantization Q2 on the other, the coefficient residues of the partition (i) of the macroblock are null or less than a threshold while the product "CBP & mask(i)" was at 1, the "CBP & mask(i)" bit is set to zero, indicating that this partition (i) of the macroblock, that was initially coded as having non-null coefficients, now has only null coefficients or close to zero. Conversely, if at least one residue coefficient of the partition (i) is non-null while the product "CBP & mask(i)" was at zero, then the "CBP & mask(i)" bit is set to 1, indicating that this partition (i) that was initially coded as having all its null coefficients, now has different coefficients from zero.

In a second step, the macroblock is processed in its entirety:

The product "CBP&mask(i)" is calculated for all the partitions (i) of the macroblock. If it is equal to zero for all the values (i), that is if, following the correction due to the requantization errors on the one hand and to the requantization Q2 on the other hand, all the coefficient residues of all the partitions of the macroblock are null, or less than a predetermined threshold, the macroblock is declared to be a candidate for the "skipped macroblock" mode. In the contrary case, it is declared to be non-candidate.

If the macroblock is a candidate for the "skipped macroblock" mode, if the other conditions of the "skipped macroblock" mode are united and if the flag "mb_skip_flag" was at 0, that is if the macroblock was not in skipped macroblock mode during its coding, the flag "mb_skip_flag" is changed and set to 1.

Conversely, if the macroblock is not a candidate for the skipped macroblock mode and if the flag "mb_skip_flag" was at 1, this flag "mb_skip_flag" is modified and set to 0 and the macroblock residues considered are coded. In this last case, if the macroblock was in P_Skip mode, then this mode switches to P_L0_16x16 mode. If the macroblock was in B_Skip mode, then this mode switches to "B_Direct_16x16" mode.

If the picture is coded in MBAFF mode, the first consequence in the data stream is the explicit presence of the "mb_field_decoding_flag" flag. This flag, in the slice data syntax (§7.3.4: Slice data syntax), indicates whether the coding is in frame or biframe mode (§ 7.4.4: Slice data semantics).

If the macroblock is the top macroblock (TOP) (CurrMbAddr % 2 == 0), the flag must be made equal to this one, which was inferred in "skip" mode (P_Skip or B_Skip), namely, deduced from the one of the pair of left or top macroblocks. In the case where the next macroblock, which is the bottom macroblock (BOTTOM) (CurrMbAddr % 2 == 1 && prevMbSkipped), explicitly coded this flag "mb_field_decoding_flag", it must no longer do so. It is then necessary to check that the "TOP" flag equal to the one that was inferred in skipped macroblock mode, is also equal to the one explicitly coded for the bottom macroblock (BOTTOM).

If the macroblock is the bottom macroblock (BOTTOM) (CurrMbAddr % 2 == 1), then two cases are considered:
- the previous macroblock is itself a "skipped macroblock". The mb_field_decoding_flag flag must then be introduced into the data stream and be made equal to the one that was inferred in skipped macroblock mode (P_Skip or B_Skip).
- as for the previous macroblock, it is not in skipped macroblock mode. The mb_field_decoding_flag flag must therefore not appear in the data stream.

At the macroblock_layer level, it is also necessary to ensure the different fields are filled with the information that was inferred in "skipped macroblock" mode. And more generally work with the context that was the one of the "skipped macroblock" mode, as for example the use of DCT 4x4, the flag transform_size_8x8_flag being inferred as having the value 0.

Hence, a certain number of conditions must be checked to modify the coding mode of a non-skipped macroblock into "skipped macroblock". It is checked that the conditions that enable the macroblock to be a candidate for the "skipped macroblock" mode are compatible with the coding conditions, during its encoding, of the non-skipped macroblock. Since a skipped macroblock can only refer to a picture 0 of the list L0, for the calculation of the predicted block from the motion vector, the non-skipped macroblock must refer to this picture 0 of L0. In other words, it is necessary that the null residues refer to the picture number 0 of the list L0. Likewise, when one is in MBAFF mode, the frame or biframe mode defined by the flag mb_field_decoding_flag defining the frame or biframe mode of the non-skipped macroblock must be the same as the one deduced in "skipped macroblock" mode. In MBAFF mode, it is also necessary that the "TOP" or "BOTTOM" field be equal to the field of the reference used.

The change of "skipped macroblock" mode into a non-skipped mode requires the fields of the data stream to be filled in and, naturally, the quantified coefficient values to be transmitted. For example, section 7.3.5 of the standard indicates, among the macroblock layer, the coded_block_pattern field that must therefore be filled by the cbp value. If the skipped macroblock must change mode, it is necessary to check the blocks of the sub-partition so as to calculate its "cbp" that defines the luminance null residue sub-partitions for the case of interest here. The cbp value is calculated according to sub-partitions, whether or not they are null, that is whether or not they have null residue coefficients.

If all the sub-partitions are null, the skipped macroblock is then a candidate for the "skipped macroblock" mode, which assumes the cbp value to be zero, and therefore is a candidate for a non-change of mode, the other conditions thus being checked to decide on the election.

The original method described enables the propagation of requantization errors to be prevented for all the macroblocks without exception, thus making it possible to improve the quality of the pictures decoded after the data stream has been converted by a bitrate conversion process of type T2.

To illustrate the effectiveness of this method, a measurement was made of the gain in dB of the signal to noise ratio or PSNR obtained on an SDTV video sequence initially coded at 2.87 Mbps and bitrate converted with the T2 algorithm to different bitrates.

| bitrate (Mbps | % bitrate reduction | standard TR (in dB) | TR with recalculation of CBP & skip (in dB) | Gain (dB) |
|---|---|---|---|---|
| 2.74 | 5% | 45.21 | 45.22 | 0.01 |
| 2.65 | 8% | 44.69 | 44.82 | 0.13 |
| 2.45 | 15% | 44.29 | 44.53 | 0.24 |
| 1.91 | 33% | 43.70 | 44.22 | 0.55 |
| 1.42 | 50% | 41.30 | 42.72 | 1.42 |

## Claims

1. Bitrate reduction method of a first coded video data stream into a second stream, by dequantization (41) of a coefficient block according to a first quantization step then requantization (43) of a block according to a second quantization step, the coding using the predictive mode calculating a predicted block from a reference picture, **characterized in that** it comprises a correcting step (42) of a coefficient block dequantized at the first quantization step, using a predicted requantization errors block (48, 49) of the reference picture obtained from a reconstructed requantization errors block (45, 46, 47), to give a corrected coefficient block, wherein the requantized block (43) is the corrected coefficient block and **in that**,
- if the current macroblock was coded according to the "skipped macroblock" mode and if at least one corrected coefficient block of this macroblock has coefficients non-null or greater than a predefined threshold, the coding mode of the macroblock is modified (50) into a mode other than "skipped macroblock" and the data of the data stream is modified or added (50) to specify this mode and the value of the coefficients.

2. Method according to claim 1, **characterized in that**, if the current macroblock is a non-skipped macroblock, if the coefficient block(s) of this macroblock have coefficients null or less than a predefined threshold and if the "skipped macroblock" mode conditions are met, the coding mode of the macroblock is changed to "skipped macroblock" mode.

3. Method according to claim 2, **characterized in that** the "Skipped macroblock" mode conditions are that the non-skipped macroblock refers to the picture 0 of the reference list L0 (refldxL0 = 0) and **in that** its motion vector is equal to the prediction motion vector.

4. Method according to claim 1, **characterized in that** the modified or added data of the stream relates, besides the residue data:
- at the level of the syntax of the slice data, to the fields:
mb_skip_flag
mb_field_decoding_flag
- at the level of the syntax of the macroblock layer, to the fields:
mb type
- at the level of the macroblock prediction syntax, to the fields:
ref idx 10 and ref idx 11,
mvd 10 and mvd 11- transform_size_8×8.

5. Method according to claim 1, **characterized in that** the macroblock mode initially skipped becomes P_L0_16x16 if it belongs to a slice P, B_Direct_16x16 if it belongs to a slice B.

6. Method according to claim 2, **characterized in that**, if the macroblock belongs to a picture of the MBAFF type, the value of the flag "mb_field_decoding_flag" is taken into account to determine whether the conditions are met.

7. Method according to claim 1, **characterized in that** the predicted error block is obtained by motion compensation (48), from the motion vector associated with the current block, of the error picture formed by the reconstructed error blocks of the reference picture.

8. Method according to claim 1, **characterized in that** the predicted error block is obtained by Intra prediction (48), from the intra prediction mode associated with the current block, prediction constructed from the reconstructed blocks of the current picture.

9. Method according to claim 1, **characterized in that** the video data streams are coded according to the MPEG 4 part 10 standard.
